## Europäisches Patentamt
## European Patent Office
## Office européen des brevets

(11) Numéro de publication: **0 073 705**
**B1**

(12) **FASCICULE DE BREVET EUROPEEN**

(45) Date de publication du fascicule du brevet:
17.04.85

(21) Numéro de dépôt: **82401516.8**

(22) Date de dépôt: **10.08.82**

(51) Int. Cl.⁴: **G 02 F 1/133**

(54) **Dispositif de visualisation à commande électrique utilisant un élément non linéaire en couche épaisse, et son procédé de fabrication.**

(30) Priorité: **25.08.81 FR 8116217**

(43) Date de publication de la demande:
**09.03.83 Bulletin 83/10**

(45) Mention de la délivrance du brevet:
**17.04.85 Bulletin 85/16**

(84) Etats contractants désignés:
**DE GB IT NL SE**

(56) Documents cités:
**DE - A - 2 837 433**
**FR - A - 2 104 800**

**SID INTERNATIONAL SYMPOSIUM-DIGEST OF TECH. PAPERS, Avril 1980, pages 198-199, Coral Gables, Florida, (USA); D.E. CASTLEBERRY et al.: "18.5/3:40 P.M.: 2" x 5" Varistor-controlled liquid crystal matrix display".**

(73) Titulaire: **THOMSON-CSF, 173, Boulevard Haussmann, F-75379 Paris Cedex 08 (FR)**

(72) Inventeur: **Hareng, Michel, THOMSON-CSF SCPI 173, bld Haussmann, F-75379 Paris Cedex 08 (FR)**
Inventeur: **Perbet, Jean-Noel, THOMSON-CSF SCPI 173, bld Haussmann, F-75379 Paris Cedex 08 (FR)**
Inventeur: **Graciet, Michel, THOSON-CSF SCPI 173, bld Haussmann, F-75379 Paris Cedex 08 (FR)**

(74) Mandataire: **Wang, Pierre et al, THOMSON-CSF SCPI 173, Bld Haussmann, F-75379 Paris Cedex 08 (FR)**

BUNDESDRUCKEREI BERLIN

## Description

La présente invention se rapporte à un écran à accès matriciel qui permet de représenter une figure en la décomposant en un ensemble de points ou éléments dont l'aspect varie en fonction de signaux de commande appliqués à des électrodes délimitant ces éléments. Cet écran utilise un matériau dont les propriétés optiques peuvent être modulées électriquement. Les signaux de commande sont appliqués aux électrodes via des résistances non linéaires jouant le rôle d'éléments de commutation.

Le principe de l'écran plat est la décomposition de l'écran en M · N éléments identiques, généralement carrés ou rectangulaires. Ces éléments peuvent être adressés individuellement. La définition de l'écran est fonction du nombre de points susceptibles de recevoir une information. Chaque point doit donc être soumis à un champ électrique. Ceci est facilement concevable pour un écran formé de quelques dizaines de points. Pour des écrans à forte définition (supérieure à $1,5 . 10^4$ points) l'accès direct, avec un fil, à chaque élément devient pratiquement impossible. Pour cette raison, on a imaginé un affichage de type matriciel facilement réalisable. Chaque élément de l'écran est alors défini par l'intersection de deux réseaux de conducteurs orthogonaux appelés lignes et colonnes: le nombre de connexions passe de M · N à M + N. Pour un écran à forte définition le gain en connexions est considérable.

L'adressage d'un élément de l'écran au moyen de tensions de commande appliquées à la ligne et à la colonne qui le concernent n'a pas besoin d'être maintenu si l'on adopte une technique de multiplexage temporel permettant par récurrence de rafraîchir l'état de l'écran. Cette technique se fonde sur un effet de persistance qui peut être physiologique ou disponible au sein de l'élément de l'écran. Dans le cas de dispositifs d'affichage à cristaux liquides, on peut assimiler la cellule élémentaire à un condensateur dont la constante de temps est suffisante pour maintenir la charge entre deux adressages transitoires successifs. Pour appliquer la tension de commande en un temps bref, on monte en série avec la cellule capacitive une résistance non linéaire, c'est-à-dire un élément du type varistance qui est pratiquement isolant en deçà d'un seuil de tension et qui devient de plus en plus conducteur au-delà de ce seuil. Une façon commode de réaliser collectivement les éléments varistance consiste à utiliser comme substrat un bloc de matériau varistance qui occupe la même étendue que l'écran (voir par exemple l'article du »SID International Symposium, Digest of Technical Papers«, 1980, pages 198 et 199). De nombreux inconvénients sont inhérents à ce procédé. Il introduit des capacités parasites non négligeables du fait de la forte constante diélectrique de l'élément non linéaire. De plus celui-ci étant généralement une varistance, qui est un matériau opaque, ne permet pas d'utiliser l'écran en transmission.

La solution proposée ici permet de pallier à ces divers inconvénients en utilisant comme substrat non plus la varistance elle-même, mais un substrat quelconque de faible permittivité qui peut être transparent (par exemple du verre) sur lequel on dépose des plots de varistance en couche épaisse. Ces varistances, malgré leur non-linéarité plus faible, ont des caractéristiques suffisantes pour des écrans.

L'invention a pour objet un dispositif de visualisation à écran destiné à visualiser des images par commande électrique de cellules d'affichage élémentaires agencées à la surface d'un substrat, chaque cellule comportant un matériau dont les propriétés optiques varient en fonction d'un champ électrique créé par une première et une seconde électrode étagées s'étendant parallèlement à ladite surface et formant condensateur, chaque cellule étant reliée à l'une des connexions électriques portées par ledit substrat, par un élément varistance dont la résistance est une fonction décroissante de la tension appliquée, dans lequel ledit substrat est fait d'une lame de matériau diélectrique réfractaire, lesdits éléments étant constitués par des plots de substance varistance reposant par l'une de leurs faces sur lesdits connexions et branchés par leur autre face à celle desdites électrodes la plus proche dudit substrat.

L'invention sera mieux comprise au moyen de la description ci-après et des figures annexées parmi lesquelles:

la figure 1 est une vue en coupe d'un dispositif de visualisation selon l'invention,

la figure 2 est une vue de dessus du dispositif de visualisation en rapport avec la figure 1,

la figure 3 est une vue partielle en coupe du dispositif de visualisation comportant des capacités de stockage,

la figure 4 est une vue de dessus du dispositif de visualisation en rapport avec la figure 3,

la figure 5 est une vue partielle en coupe d'un dispositif de visualisation conçu avec une structure dite en volume.

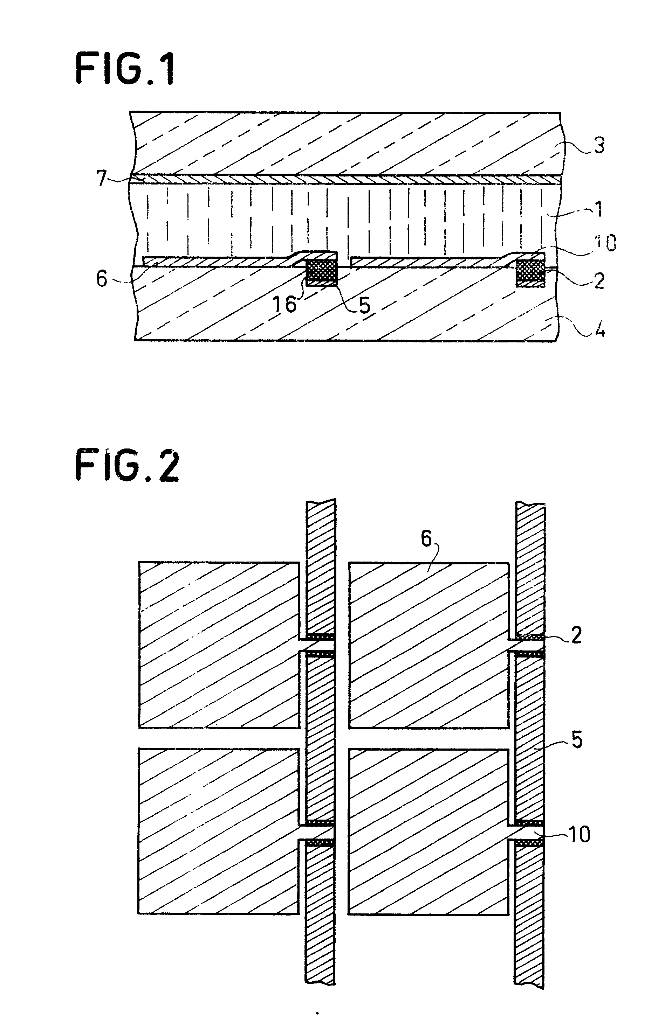

Sur la figure 1, à titre d'exemple non limitatif, on a représenté une vue partielle en coupe d'un dispositif de visualisation comprenant une couche de matériau électro-optique 1 dont chaque élément est commandé par un plot 2 en matériau résistif du type varistance. Dans le cadre de la présente invention, on a choisi d'utiliser une couche de cristal liquide comme matériau de visualisation par commande électrique. Cette couche de cristal liquide est enserrée dans l'espace laissé libre entre les lames 3 et 4. L'écartement d'une dizaine de microns est défini par des cales d'épaisseur non représentées.

Il est connu d'appliquer un champ électrique à un cristal liquide pour modifier l'orientation de ses molécules afin de moduler la lumière incidente. Les matériaux présentant une phase mésomorphe sont faits de molécules longiformes orientables en présence d'une paroi solide, suivant une direction commune qui peut être soit parallèle soit perpendiculaire au plan de la paroi. La direction de cette orientation dépend des natures respectives du matériau cristal liquide et de la paroi. L'orientation des longues molécules du cristal liquide est en outre grandement facilitée par l'utilisation de surfactants appropriés assurant un traitement préalable des parois en contact avec le film (frottis de la paroi, évaporation sous incidence rasante d'un film d'oxyde de silicium). Suivant l'effet désiré, on utilisera un matériau mésomorphe présentant l'une ou l'autre des trois phases suivantes: smectique, nématique et cholestérique.

La couche de cristal liquide 1 est commandée électriquement par l'intermédiaire des électrodes 6 et 7 situées respectivement sur les lames 4 et 3. Chaque électrode 6 définit par le contour de sa surface qui est de l'ordre du millimètre carré, une cellule représentant un élément d'un écran à accès matriciel par exemple. Les tensions de commande de la couche de cristal liquide 1 sont amenées par l'intermédiaire de connexions de lignes et de colonnes. Lorsque les lignes et les colonnes relient entre elles plusieurs cellules, la commande d'une cellule crée un champ électrique de commutation, mais d'autres cellules à ne pas commuter peuvent être le siège de champs électriques parasites indésirables.

En effet pour qu'un point de l'écran (i, j) déterminé par la ligne i et par la colonne j soit soumis à un champ électrique Eij, la ligne i doit être au potentiel Vi et la colonne j au potentiel Vj. A cause de ces potentiels présents sur la ligne i et sur la colonne j, d'autres points du matériau électro-optique peuvent être le siège de champs électriques inférieurs donnant naissance à des états non désirés. Pour remédier à ce défaut il faut que chaque élément de l'écran ne réagisse qu'à partir d'une certaine tension de seuil. A cet effet il est connu d'utiliser comme élément de commutation une varistance mise en serie avec chaque point à exciter.

Suivant ce principe chaque point de l'écran est mis en série avec une varistance (VDR). Cette dernière est une céramique dont la conductivité varie fortement au-delà d'une tension de seuil Vs. La réponse théorique d'une telle association dépend alors principalement de cette tension de seuil Vs:

— pour V < Vs, l'impédance de la varistance est élevée par rapport à celle de la cellule à cristal liquide si bien qu'aucun courant de charge ne circule, V étant la différence de potentiel aux bornes de la varistance,

— pour V > Vs, l'impédance de la varistance chute et l'élément électro-optique reçoit un courant de charge ou de décharge.

Quand la tension V redevient inférieure à Vs, l'impédance de la varistance est de nouveau élevée par rapport à celle du cristal liquide et la capacité constituée par la cellule se décharge lentement avec une constante de temps proportionnelle à cette capacité et à la résistance de fuite du système. Il suffit donc de rafraîchir un tel affichage en un temps inférieur à ce temps de stockage par une nouvelle impulsion de tension telle que V Vs. En fixant Vs à une valeur très supérieure au seuil du matériau électro-optique, on peut obtenir des temps de réponse plus courts et donc des taux de multiplexage N élevés.

$$N = \frac{T}{t}$$

avec: T = temps ecoulé entre deux rafraîchissements de charge.

et t = temps de charge déterminé par le produit R · C dans la phase de fonctionnement avec dépassement du seuil Vs.

Dans tout ce qui suit, on qualifiera de réfractaire tout substrat pouvant supporter sans altérations de ses propriétés les températures auxquelles il est soumis au cours des différentes phases de la fabrication de l'écran.

Sur un substrat réfractaire 4, par exemple un verre haute température qui peut être le verre 7059 de la firme »Corning« dont la température de recuit est 635°C, on a réalisé dans des longements 16 des lignes d'accès conductrices 5 d'environ 100 µm de largeur. Ces connexions de lignes, qui sont parallèles entre elles et régulièrement espacées peuvent être réalisées par photogravure d'une couche métallique déposée sous vide. On dépose alors sur ces lignes des plots 2 de varistance en couche épaisse.

Pour réaliser ces plots on part d'un matériau de base en varistance. Ce matériau peut être constitué par un agglomérat de poudre d'oxyde de zinc ZnO qui contient des particules d'oxyde de bismuth $Bi_2O3$ et d'oxyde de maganèse $MnO_2$ afin d'améliorer les caractéristiques de la varistance. Ce matériau se présente sous la forme de bloc compact qui représente la matière première des plots de varistance suivant l'invention. Ce matériau est finement broyé de manière à obtenir une poudre à laquelle on ajoute un liant, par exemple du verre. La pâte que l'on obtient à partir de ce mélange est déposée par sérigraphie sur les connexions de lignes en face de chaque cellule à exciter et est alors recuite à 520°C. Il est également possible d'utiliser un liant organique pour préparer la pâte à sérigraphier, auquel cas la température de cuisson en place est plus basse. Les plots ainsi réalisés ont une épaisseur d'environ 25 µm.

Les varistances présentent la propriété d'avoir une résistance nonlinéaire et fortement dépendante de la tension à laquelle elles sont soumises. Ces varistances déposées en couche épaisse, malgré une nonlinéarité moins accentuée que les varistances réalisées selon les techniques usuelles ont des caractéristiques suffisantes pour les dispositifs de visualisation à commande par seuil de tension. Un autre avantage de ce mode de réalisation est la faible constante diélectrique que présente les plots de varistance: de l'ordre de $14\varepsilon_0$ ($\varepsilon_0$ étant la permittivité du vide) ce qui contribue à diminuer les capacités parasites.

Les électrodes 6 sont alors déposées par exemple par évaporation à travers un masque. Elles seront soit réfléchissantes soit transparentes selon que l'on utilise l'écran en réflexion ou en transmission. Dans le cas d'une utilisation en réflexion on peut utiliser pour les électrodes 6 de l'aluminium qui possède d'excellentes propriétés de réflexion spéculaire. Dans le cas d'un usage en transmission on utilisera par exemple un dépôt d'oxyde d'étain ou d'indium ou un mélange de ces deux oxydes.

Les connexions de lignes 5, qui amènent les tensions de commande aux électrodes 6, sont de largeur réduite par rapport aux dimensions des électrodes qui sont les éléments qui doivent commander l'orientation des molécules du cristal liquide. Chacune des connexions de lignes 5 commande par l'intermédiaire des plots de varistance 2 une rangée d'électrodes 6 qui lui est parallèle. Le contact entre les électrodes 6 et les plots de varistance 2 se fait par de petites languettes 10 de même nature que les électrodes.

La lame 3 peut être de même nature que la lame 4. Elle supporte, sur sa face intérieure, un réseau de connexions de colonnes 7 transparentes, qui peuvent être avantageusement constituées par un dépôt d'oxyde d'étain ou d'indium ou d'un mélange de ces deux oxydes. Ces connexions de colonnes sont placées, dans cet exemple de réalisation, orthogonalement par rapport aux rangées d'électrodes 6, chaque colonne recouvrant toutes les électrodes des rangées qu'elle croise.

On utilise généralement dans les écrans à cristaux liquides un cristal présentant à la température ambiante une phase nématique mettant en oeuvre l'un des trois effets suivants: la biréfringence électriquement contrôlée, la diffusion dynamique ou le nématique en hélice. Ce dernier effet possède l'intéressante propriété de se prêter à une rotation de 90° d'une lumière linéairement polarisée se propageant perpendiculairement aux lames. La cellule, placée entre polariseurs croisés transmet la lumière au repos et la bloque sous champ. Une telle utilisation de la cellule exige souvent que les lames 3 et 4 soient transparentes, ainsi que les électrodes 6.

Les plots de varistance 3 et les connexions de lignes 5 présentent une surface réduite et ne gênent pas la transmission de la lumière. Ceci est une conséquence avantageuse de l'invention. En effet dans l'art antérieur on utilisait le matériau varistance comme substrat et ce matériau étant opaque il était impossible d'obtenir un écran fonctionnant en transmission.

Il entre également dans le cadre de l'invention d'utiliser un mélange nématique-cholestérique qui présente un effet mémoire, dans lequel on peut mélanger des particules formant un pigment dichroïque de façon à changer la qualité modulatrice de l'écran. Dans cette réalisation la couche de cristal liquide est transpartente à l'état de repos. Pour commander l'orientation des molécules du cristal liquide on peut utiliser la même technique que pour obtenir un effet de biréfringence ou un effet de diffusion dynamique.

Un écran utilisable en réflexion est facilement réalisable en déposant sur la lame 4 non plus des électrodes 6 transparentes mais des électrodes en aluminium jouant ainsi le rôle de miroir.

Il est aussi possible d'utiliser un écran où chaque électrode 6 est adressée individuellement et où les colonnes 7 sont remplacées par une électrode unique.

La figure 2 est une vue de dessus de l'écran en rapport avec la figure 1, en supposant enlevées la lame 3 et la couche de cristal liquide 1. Cette figure permet d'avoir un meilleur aperçu de la disposition des électrodes 6, des connexions de lignes 5 ainsi que des plots 2 en varistance.

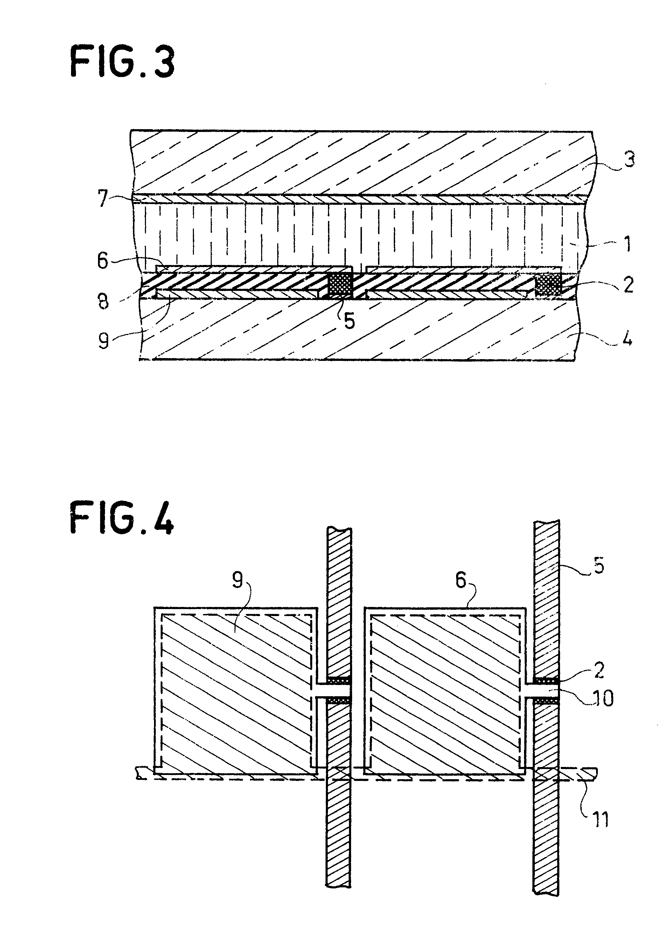

La figure 3 est une vue partielle en coupe d'une variante d'un dispositif de visualisation comportant des capacités de stockage. Pour augmenter le temps de stockage de l'information qui résulte de la capacité et des résistances de fuite de l'élément électro-optique, on peut mettre une capacité de stockage en parallèle sur chaque élément de visualisation. A cet effet, on dispose sur la lame 4 une couche de diélectrique 8. Entre la lame 4 et le diélectrique 8, on a disposé en vis-à-vis de chaque électrode 6 des secondes électrodes 9 de façon à former un condensateur pour chaque cellule de visualisation. Ces diélectriques peuvent être réalisés soit en couche épaisse pour les écrans à faible résolution, soit en couche mince pour des écrans à plus haute résolution. La couche de diélectrique 8 peut être un photopolymère réalisé en couche épaisse. Il peut être sérigraphié ou réalisé en couche mince. Pour un écran utilisé en transmission la couche de diélectrique est réalisée en couche mince afin d'être transparente et les électrodes 9 sont réalisées en oxyde d'étain ou d'indium ou par un mélange de ces deux oxydes. Pour une utilisation de l'écran en réflexion les électrodes 9 peuvent être en aluminium ou en tout autre matériau conducteur. Dans tous les cas le diélectrique 8 ne doit pas être poreux pour éviter que le cristal liquide ne s'y infiltre. On peut aussi utiliser de la silice.

La figure 4 est une vue de dessus de l'écran en rapport avec la figure 3. Elle met en évidence la forme et la disposition des électrodes 9. L'électrode 6 est une électrode commune à la cellule de visualisation et au condensatuer de stockage. Les électrodes 9 sont reliées les unes aux autres suivant les colonnes, parallèlement aux connexions de colonnes 7. Ceci est réalisé par l'intermédiaire d'une bande conductrice 11 reliée extérieurement à la colonne de même rang.

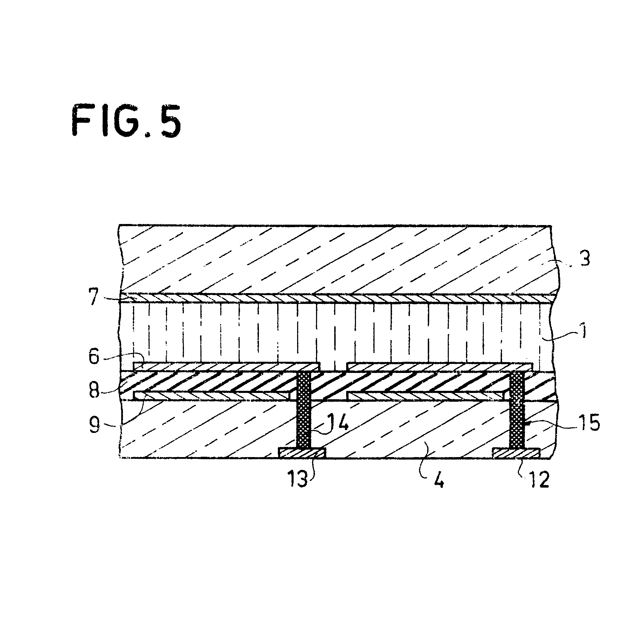

Il est aussi possible de disposer les connexions de ligne non plus sur la face intérieure de la lame 4 mais sur sa face extérieure. On dispose ainsi d'une structure dite en volume qui est illustrée par la figure 5. Cette figure est une vue partielle en coupe d'un écran selon une telle réalisation. Sur la face extérieure de la lame 4 on a réalisé des logements 12 pour les connexions de lignes 13. On a ensuite déposé les électrodes 9 et les bandes conductrices 11, puis le diélectrique 8 qui est par exemple de la silice et qui résiste à la cuisson. Des trous 15 sont faits par exemple au moyen d'un laser. On vient y placer l'élément varistance 14 décrit plus haut. L'ensemble est alors porté à la température de cuisson de la varistance. Les électrodes 6 sont ensuite déposées. Chaque électrode 6 est donc reliée électriquement, par l'intermédiaire de l'élément varistance, aux connexions de lignes 13 correspondantes. Ce procédé présente l'avantage de ne pas mettre les connexions de ligne en contact avec la couche de cristal liquide.

La conception d'un écran selon l'invention présente l'avantage d'éliminer les capacités parasites introduites par l'utilisation d'un substrat en varistance. Ces capacités parasites sont particulièrement nuisibles pour un fonctionnement de l'écran en impulsions. Un autre avantage de l'invention est la possibilité d'utiliser l'écran en transmission. Cette technique peut s'appliquer à des écrans de grande dimension pouvant fonctionner à la cadence télévision.

## Revendications

1. Dispositif de visualisation à écran destiné à visualiser des images par commandé électrique de cellules d'affichage élémentaires agencées à la surface d'un substrat, chaque cellule comportant un matériau (1) dont les propriétés optiques varient en fonction d'un champ électrique créé par une première (6) et une seconde (7) électrode étagées s'étendant parallèlement à ladite surface et formant condensateur, chaque cellule étant reliée à l'une des connexions électriques (5) protées par ledit substrat, par un élément varistance (2) dont la résistance est une fonction décroissante de la tension appliquée, caractérisé en ce que ledit substrat est fait d'une lame de matériau diélectrique réfractaire, lesdits éléments étant constitués par des plots de substance varistance raposant par l'une de leurs faces sur lesdites connexions et branchés par leur autre face à celle desdites électrodes la plus proche dudit substrat.

2. Dispositif de visualisation à écran selon la revendication 1, caractérisé en ce que les tensions créant le champ électrique de commande des cellules sont distribuées par un réseau matriciel de lignes et de colonnes.

3. Dispositif de visualisation à écran selon l'une des revendications 1 ou 2, caractérisé en ce que ledit matériau électro-optique (1) est un cristal liquide.

4. Dispositif de visualisation à écran selon la revendication 3, caractérisé en ce que le cristal liquide est un mélange nématique-cholestérique.

5. Dispositif de visualisation à écran selon la revendication 3, caractérisé en ce que le cristal liquide est un cristal nématique en hélice.

6. Dispositif de visualisation à écran selon l'une des revendications 3 à 5, caractérisé en ce que le cristal liquide comprend un pigment dichroïque.

7. Dispositif de visualisation à écran selon l'une quelconque des revendications 3 à 6, caractérisé en ce qu'un traitement d'au moins une surface en contact avec ladite couche est réalisé pour favoriser une orientation préférentielle des molécules formant le cristal liquide.

8. Dispositif de visualisation à écran selon l'une quelconque des revendications 2 à 7, caractérisé en ce que des troisièmes électrodes (9) sont placées en vis-à-vis des premières électrodes (6) pour former condensateur du côté opposé audit matériau électro-optique (1), une couche d'isolant (8) séparant lesdites premières et troisièmes électrodes (6 et 9), les troisièmes électrodes (9) correspondant à une même colonne étant reliées extérieurement par une bande conductrice (11) à l'une des secondes électrodes (7).

9. Procédé de fabrication d'un dispositif de visualisation à écran selon la revendication 1, caractérisé en ce que sur une lame réfractaire (4) pourvue de connexions de lignes (5), des plots d'une pâte à base de matériau varistance sont déposées localement, l'ensemble étant porté à une température de cuisson assurant le traitement thermique de ladite pâte, des premières électrodes (6) étant ensuite déposées au-dessus de ladite lame réfractaire, chaque première électrode (6) ayant un prolongement en contact avec la face supérieure d'un plot (2), une seconde lame (3) soutenant des secondes électrodes (7) formant condensateur avec lesdites premières électrodes (6) étant placée en vis-à-vis de ladite lame réfractaire (4) et en étant séparée par des entretoises, une couche de matériau électro-optique (1) étant insérée dans l'espace aménagé entre lesdites lames (3, 4).

## Patentansprüche

1. Bildschirm-Anzeigevorrichtung zum Anzeigen von Bildern durch elektrische Steuerung von elementaren Anzeigezellen, die an der Oberfläche eines Substrats angeordnet sind, wobei jede Zelle ein Material (1) umfaßt, dessen optische Eigenschaften sich in Abhängigkeit von einem elektrischen Feld verändern, das durch eine erste Elektrode (6) und eine zweite Elektrode (7) erzeugt wird, welche auf verschiedenen Stufen angeordnet sind und sich parallel zu der genannten Oberfläche erstrecken sowie einen Kondensator bilden, wobei jede Zelle mit einem der von dem genannten Substrat getragenen elektrischen Anschlüsse (5) über ein Varistorelement (2) verbunden ist, dessen Widerstand eine abnehmende Funktion der angelegten Spannung ist, dadurch gekennzeichnet, daß das genannte Substrat aus einer Scheibe dielektrischen und hitzebeständigen Materials gebildet ist, wobei die genannten Elemente durch Klötzchen aus Varistorsubstanz gebildet sind, welche auf einer ihrer Flächen auf den genannten Anschlüssen ruhen und auf ihrer anderen Fläche an diejenige der genannten Elektroden angeschlossen sind, die dem Substrat am nächsten liegt.

2. Bildschirm-Anzeigevorrichtung nach Anspruch 1, dadurch gekennzeichnet, daß die das elektrische Steuerfeld für die Zellen erzeugenden Spannungen durch ein Matrixnetzwerk aus Zeilen und Spalten verteilt werden.

3. Bildschirm-Anzeigevorrichtung nach Anspruch 1 oder 2, dadurch gekennzeichnet, daß das elektrooptische Material (1) ein Flüssigkristall ist.

4. Bildschirm-Anzeigevorrichtung nach Anspruch 3, dadurch gekennzeichnet, daß der Flüssigkristall ein nematisch-cholesterisches Gemisch ist.

5. Bildschirm-Anzeigevorrichtung nach Anspruch 3, dadurch gekennzeichnet, daß der Flüssigkristall ein nematischer Kristall mit Schraubenstruktur ist.

6. Bildschirm-Anzeigevorrichtung nach einem der Ansprüche 3 bis 5, dadurch gekennzeichnet, daß der Flüssigkristall einen dichroitischen Farbstoff enthält.

7. Bildschirm-Anzeigevorrichtung nach einem der Ansprüche 3 bis 6, dadurch gekennzeichnet, daß eine Behandlung wenigstens einer Oberfläche die mit der genannten Schicht in Berührung steht, zur Unterstützung einer bevorzugten Orientierung der den Flüssigkristall bildenden Moleküle durchgeführt ist.

8. Bildschirm-Anzeigevorrichtung nach einem der Ansprüche 2 bis 7, dadurch gekennzeichnet, daß dritte Elektroden (9) gegenüber den ersten Elektroden (6) angeordnet sind, um als Kondensator auf der dem elektrooptischen Material (1) gegenüberliegenden Seite zu wirken, wobei eine Isolierschicht (8) die genannten ersten und dritten Elektroden (6 und 9) trennt und wobei die dritten Elektroden (9), welche derselben Spalte entsprechen, extern durch einen Leiterstreifen (11) mit einer der zweiten Elektrode (7) verbunden sind.

9. Verfahren zur Herstellung einer Bildschirm-Anzeigevorrichtung nach Anspruch 1, dadurch gekennzeichnet, daß auf der mit Zeilenanschlüssen (5) versehenen hitzbeständigen Scheibe (4) Klötzchen aus einer Paste auf der Grundlage eines Varistormaterials örtlich aufgebracht werden, die gesamte Einheit auf eine Aushärttemperatur erwärmt wird, welche die thermische Behandlung der genannten Paste gewährleistet, anschließend erste Elektroden (6) oberhalb der hitzbeständigen Scheibe aufgebracht werden, wobei jede erste Elektrode (6) eine Verlängerung besitzt, die mit der Oberseite eines Klötzchens (2) in Berührung ist, eine zweite Scheibe (3), welche die zweite, mit den ersten Elektroden (6) als Kondensator wirkende Elektroden (7) trägt, gegenüber der genannten hitzbeständigen Scheibe (4) angeordnet wird und von dieser durch Stege getrennt ist und eine Schicht aus elektro-optischem Material (1) in den Raum zwischen den genannten Scheiben (3, 4) eingefügt wird.

## Claims

1. Screen visualization device for displaying images by electric control of elementary display cells arranged at the surface of a substrate, each cell comprising a material (1) the optical properties of which vary as a function of an electric field generated by a first (6) and a second (7) electrode arranged in stepped manner and extending parallel to said surface with the properties of a capacitor, each cell being connected to one of the electric connections (5) carried by said substrate through a varistor member (2) the resistance of which is a decreasing function of the applied voltage, characterized in that said substrate is formed of a sheet of dielectric refractory material, said elements being formed of small blocks of varistor substance bearing on one of their faces on said connections and connected on their other face to that of said electrodes which is closest to the substrate.

2. Screen visualization device according to claim 1, characterized in that the voltages generating the electric field for the control of the cells are distributed by a matrix pattern of lines and columns.

3. Screen visualization device according to any of claims 1 or 2, characterized in that said electro-optical material (1) is a liquid crystal.

4. Screen visualization device according to claim 3, characterized in that the liquid crystal is a namatic-cholesteric mixture.

5. Screen visualization device accoring to claim 3, characterized in that the liquid crystal is a helical nematic crystal.

6. Screen visualization device according to any of claims 3 to 5, characterized in that the liquid crystal comprises a dichroic pigment.

7. Screen visualization device according to any of claims 3 to 6, characterized in that a treatment of at least one surface contacting said layer is performed in favor of a preferential orientation of the molecules forming said liquid crystal.

8. Screen visualization device according to any of claims 2 to 7, characterized in that third electrodes (9) are placed in facing relationship to the first electrodes (6) forming capacitor on the side opposed to said electro-optical material (1), an insulating layer (8) separating said first and third electrodes (6 and 9), the third electrodes (9) corresponding to the same column being connected externally through a conductive strip (11) to one of the second electrodes (7).

9. Method of producing a screen visualization device according to claim 1, characterized in that small blocks of a varistor material base paste are locally deposited on a refractory sheet (4) provided with line connections (5), the unit being heated to a curing temperature assuring the thermal treatment of said paste, first electrodes (6) being subsequently deposited above said refractory sheet, each first electrode (6) having an extension contacting the upper face of a block (2), a second sheet (3) carrying second electrodes (7) forming capacitor with said first electrodes (6) being placed in facing relationship to said refractory sheet (4) while being separated therefrom by fillets, a layer of electro-optical material (1) being inserted into the space formed between said sheets (3, 4).

# FIG.1

# FIG.2

# FIG.3

# FIG.4

# FIG.5